(19) Europäisches Patentamt
European Patent Office
Office européen des brevets

(11) Publication number : **0 484 152 B1**

# (12) EUROPEAN PATENT SPECIFICATION

(45) Date of publication of patent specification : **15.12.93 Bulletin 93/50**

(51) Int. Cl.$^5$ : **C10L 1/32**

(21) Application number : **91310054.1**

(22) Date of filing : **31.10.91**

## (54) Additive composition for coal-water slurry and coal-water slurry composition.

(30) Priority : **01.11.90 JP 296241/90**

(43) Date of publication of application : **06.05.92 Bulletin 92/19**

(45) Publication of the grant of the patent : **15.12.93 Bulletin 93/50**

(84) Designated Contracting States : **DE FR GB SE**

(56) References cited : **EP-A- 0 278 983**

(73) Proprietor : **NIPPON SHOKUBAI CO., LTD.**
**1-1, Koraibashi, 4-chome**
**Chuo-ku, Osaka-shi, Osaka (JP)**
Proprietor : **KAWASAKI JUKOGYO KABUSHIKI KAISHA**
**1-1 Higashikawasaki-cho 3-chome**
**Chuo-ku Kobe-shi Hyogo-ken (JP)**

(72) Inventor : **Hayashi, Ken-ichiro**
**301-9-6, Ise-cho, Kawasaki-ku**
**Kawasaki-shi, Kanagawa-ken (JP)**
Inventor : **Goto, Takakiyo**
**985-6, Kamiiida-cho, Izumi-ku**
**Yokohama-shi, Kanagawa-ken (JP)**
Inventor : **Tatsumi, Shuhei**
**16-31, Takaoka 5-chome, Okubo-cho**
**Abashi-shi, Hyogo-ken (JP)**
Inventor : **Takao, Shoichi**
**1180-152, Nishiwaki, Okubo-cho**
**Akashi-shi, Hyogo-ken (JP)**

(74) Representative : **Rees, David Christopher et al**
**Kilburn & Strode 30 John Street**
**London WC1N 2DD (GB)**

**EP 0 484 152 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an additive composition for coal-water slurry and to a coal-water slurry composition obtained by the additive composition. More particularly, it relates to an additive composition which aids in dispersing coal powder in water and consequently allows production of a fully flowable coal-water slurry even with high coal concentration and to a coal-water slurry composition which contains the additive composition.

The petroleum which has been finding extensive utility as an energy source to date is fated to encounter a conspicuous rise of price by reason of speculation and is doomed to exhaust sooner or later. In the circumstances, the development of some other energy source which is inexpensive and capable of stable supply has emerged as an urgent task. Coal, thus, is also on the verge of witnessing revival of extensive utility thereof. Coal, however, permits desired utility only with technical difficulty because of the disadvantage that since it is in a solid state at normal room temperature, it defies conveyance by a pipeline, allows no easy handling, and entails the possibility of coal powder being drifted and consequently causing environmental pollution or dust explosion. As a result, a desire has been expressed for a technique which is capable of fluidizing coal enough to realize conveyance by a pipeline and allow easy handling and, at the same time, precluding the possibility of coal powder causing environmental pollution or dust explosion. One of the techniques heretofore developed for coal fluidization comprises finely dividing coal and using the resultant coal powder as dispersed in a medium such as methanol or fuel oil. The COM (coal-oil mixture), for example, has been already commercialized. Since this method uses oil as a medium, however, it is problematic in point of stable supply and price. The COM has been gradually giving way to the highly concentrated coal-water slurry which uses inexpensive and readily available water as a medium.

The technique for converting coal into slurry in water is promising to find very extensive utility in direct combustion of coal, gasification of coal, and other forms of exploitation of coal as well as in conveyance of coal by a pipeline. Thus, it has posed itself an important task for realizing economic use of coal in the future. The coal-water slurry is desired to be a slurry of high concentration having a small water content from the viewpoint of economy and prevention of environmental pollution. Particularly, in the case of the direct combustion of coal-water slurry which can eliminate the problems of waste water disposal and environmental pollution, the water content of this slurry must be decreased to the fullest possible extent for the purpose of enabling the coal-water slurry to be introduced into a cyclone or a turbulent burner and directly burned in the furnace thereof without requiring such preparatory treatments as removal of water and drying.

An attempt at heightening the concentration of coal in the coal-water slurry by the known technique, however, entails a disadvantage that the slurry notably gains in viscosity at a sacrifice of flowability. Conversely, an attempt at decreasing the coal concentration in the slurry compels a sacrifice of the efficiency of conveyance, the efficiency of combustion, etc. An attempt at dewatering the coal-water slurry prior to use results in a disadvantage that the steps of dewatering and drying of the slurry call for an extra cost and bring about the problem of environmental pollution.

Various dispersants for use in the coal-water slurry have been proposed for the purpose of solving these problems encountered by the conventional coal-water slurry. The dispersants disclosed to date include formalin condensates of alkylene oxide additive of phenol (JP-A-59-36,537(1984)), partially desulfonated ligninsulfonates (JP-A-58-45,287(1983)), naphthalenesulfonate-formalin condensates (JP-A-56-21,636(1981) and JP-A-56-136,665(1981)), polystyrene sulfonates (JP-A-57-145,187(1982) and JP-A-62-590(1987)), copolymers of polyoxyalkylene vinyl monomers with carboxylic acid monomers (JP-A-63-113,098(1988)), copolymers of polyoxyalkylene vinyl monomers with vinyl monomers possessing a sulfonate (JP-A-62-121,789(1987)), and other similar water-soluble copolymers, for example. These dispersants, however, invariably necessitate use of additives in a large amount to impart practically sufficient flowability to the slurry or they fail to enable the slurry to be concentrated to a fully satisfactory degree. They also have a problem of sensitivity to the quality of coal such that they prevent coal of some sort from being converted into slurry in water and the coal-water slurry produced at all readily gains in viscosity in the process of aging.

In recent years, for the purpose of solving these problems, efforts have been being devoted to the development of a technique which resorts to combined use of a specific dispersant and a specific adjutant. The combinations of this principle which have been proposed to date include compositions combining partially sulfonated polystyrene with hydroxypolycarboxylates or polyphosphates (JP-A-64-87,694(1989) and JP-A-64-87,695(1989)) and compositions combining formaldehyde polycondensates between ligninsulfonic acids and naphthalenesulfonic acids with polyphosphates (JP-A-60-26,090(1985)), for example. Use of these compositions, however, fails to bring about a fully satisfactory effect. Particularly when the coal subjected to conversion into slurry in water happens to have a high ash content, these compositions are only insufficiently capable of effecting the desired conversion. A desire, therefore, has been expressed for an additive which is capable of heightening the coal concentration in the slurry at a low application rate and imparting highly satisfactory flowability to the produced slurry.

We continued a diligent study with a view to solving the problems described above and consequently acquired a knowledge that a composition combining a specific water-soluble copolymer produced by using a polyoxyalkylene vinyl monomer and a carboxylic acid monomer as essential components with a specific electrolytic compound manifests an outstanding effect in the conversion of coal of a high ash content into slurry in water. This invention has been perfected as a result.

Specifically, an object of this invention is to provide an additive composition which is capable of readily producing a highly concentrated coal-water slurry of satisfactory flowability even from coal of a high ash content and a coal-water slurry composition containing the additive composition.

The object described above is accomplished by an additive composition for use in a highly concentrated coal-water slurry, having as essential components thereof

(a) a water-soluble copolymer obtained by using as essential components (I) at least one alkyleneglycol group-containing monomer represented by the general formula I:

$$\begin{array}{ccccccccccc} A^1 & & A^3 & & & & & & & & \\ | & & | & & & & & & & & \\ C & = & C & - & R^1 & - & O & - & (R^2\text{-}O)_n & - & R^3 \\ | & & & & & & & & & & \\ A^2 & & & & & & & & & & \end{array} \qquad (\mathrm{I})$$

wherein $A^1$ and $A^2$ are independently hydrogen atom, methyl group, or -COOX, providing that $A^1$ and $A^2$ are not simultaneously -COOX,
$A^3$ is hydrogen atom, methyl group, -COOX, or $-CH_2COOX$, providing that $A^1$ and $A^2$ are independently hydrogen atom or methyl group when $A^3$ is -COOX or $-CH_2COOX$,
$R^1$ is -CO- or $-CH_2CO-$,
$R^2$ is alkylene group of 2 to 4 carbon atoms,
n is a number in the range of 1 to 100 on the average,
$R^3$ is a monovalent organic group selected from the class consisting of alkyl groups of 1 to 30 carbon atoms, alkenyl groups of 2 to 30 carbon atoms, aryl groups of 6 to 30 carbon atoms, aralkyl groups of 7 to 30 carbon atoms, cycloalkyl groups of 3 to 30 carbon atoms, cycloalkenyl groups of 3 to 30 carbon atoms, and heterocyclic compounds of 2 to 30 carbon atoms, and X is hydrogen atom, alkali metal atom, alkaline earth metal atom, ammonium group, or alkylamine group, (hereinafter referred to briefly as "alkoxy monomer (I)") and (II) at least one unsaturated carboxylic acid monomer represented by the general formula II:

$$\begin{array}{ccccc} B^1 & & B^3 & & \\ | & & | & & \\ C & = & C & - & COOM \\ | & & & & \\ B^2 & & & & \end{array} \qquad (\mathrm{II})$$

wherein $B^1$ and $B^2$ are independently hydrogen atom, methyl group, or -COOY, providing that $B^1$ and $B^2$ are not simultaneously -COOY,
$B^3$ is hydrogen atom, methyl group, -COOY, or $-CH_2COOY$, providing that $B^1$ and $B^2$ are independently hydrogen atom or methyl group when $B^3$ is -COOY or $-CH_2COOY$, and
M and Y are independently hydrogen atom, alkali metal atom, alkaline earth metal atom, ammonium group, or alkylamines group, (hereinafter referred to briefly as "carboxylic monomer (II)")
in a weight ratio of the alkoxy monomer (I) to the carboxylic monomer (II), i.e. alkoxy monomer (I)/carboxylic monomer (II), in the range of from 0.5/99.5 to 15/85, in a total amount of the alkoxy monomer (I) and the carboxylic monomer (II) accounting for a proportion of not less than 60% by weight based on the total amount of the monomers used in the water-soluble copolymer and

(b) an electrolytic compound of which the anion moiety has a chemical formula weight of not more than 500 and the anion moiety has a chemical formula weight of not more than 100 per electric charge.

The object is further accomplished by a coal-water slurry composition produced by the combination of a

coal-water slurry with the additive composition defined above.

The additive composition of the present invention for use in a coal-water slurry preeminently excels in enhancing the dispersibility of coal in water, imparts very high dispersibility even to coal of a high ash content, and permits production of a coal-water slurry composition having a high coal concentration, exhibiting high flowability, and suffering no change of viscosity by aging.

Use of the highly concentrated coal-water slurry composition obtained by incorporation of the additive composition of this invention in a coal-water slurry enables the conveyance of coal by a pipeline to be materialized with great economy and eliminates problems encountered by coal in point of storage, conveyance, and combustion on account of the solidity in state.

The additive composition of this invention for use in the coal-water slurry, therefore, is capable of making a great contribution to disseminating the techniques for exploitation of coal such as, for example, direct combustion of coal and gasification of coal.

This invention resides in an additive composition for use in a highly concentrated coal-water slurry, which additive composition essentially comprises the combination of a carboxyl group-containing water-soluble copolymer with a specific electrolytic compound, and in a coal-water slurry incorporating the additive composition therein.

This invention does not discriminate the coal for use in the coal-water slurry on account of kind of coal, place of origin, water content, and chemical composition. In fact, this invention can be embodied with coal of any sort. The kinds of coal which are effectively usable herein include anthracite, bituminous coal, subbituminous coal, and lignite, for example. This invention is particularly effective in the production of a coal-water slurry from coal of a high ash content in the range of 10 to 50% by weight, for example. The coal of this quality, prior to use, is pulverized by the well-known wet or dry method into particles generally having a particle size distribution such that the particles of 200-mesh pass account for a proportion of not less than 50% by weight, preferably in the range of 70 to 90% by weight. The coal powder concentration in the coal-water slurry is generally not less than 40% by weight, preferably in the range of 50 to 90% by weight, on dry basis. If the coal powder concentration is less than 40% by weight, the coal-water slurry is not practical in terms of economy, efficiency of conveyance, and efficiency of combustion.

The water-soluble copolymer which effectively constitutes the component (a) of the additive composition of this invention for the coal-water slurry is obtained from a raw material monomer using as essential components thereof an alkoxy monomer (I) and a carboxylic monomer (II) in a weight ratio of the alkoxy monomer (I) to the carboxylic monomer (II), i.e. alkoxy monomer (I)/carboxylic monomer (II), in the range of 0.5/99.5 to 15/85, preferably 1/99 to 10/90, in a total amount of the alkoxy monomer (I) and the carboylic monomer (II) accounting for a proportion of not less than 60% by weight, preferably in the range of 80 to 100 % by weight, based on the total amount of all the monomers to be used in the water-soluble copolymer.

The monomer (I) is represented by the general formula I and can be produced by the conventional method.

$$\begin{array}{lllllll} A^1 & A^3 & & & & & \\ | & | & & & & & \\ C = & C & - R^1 & - O & - (R^2\text{-}O)_n & - R^3 & \\ | & & & & & & \\ A^2 & & & & & & \qquad\qquad (I) \end{array}$$

wherein $A^1$ and $A^2$ are independently hydrogen atom, methyl group, or -COOX, wherein X is hydrogen atom, alkali metal atom, alkaline earth metal atom, ammonium group, or alkylamines group, providing that $A^1$ and $A^2$ are not simultaneously -COOX, $A^3$ is hydrogen atom, methyl group, -COOX, or a $-CH_2COOX$, wherein X has the same meaning as defined above, preferably hydrogen atom or methyl group, providing that $A^1$ and $A^2$ are independently hydrogen atom or methyl group when $A^3$ is -COOX or $-CH_2COOX$, $R^1$ is -CO- or $-CH_2CO-$, preferably -CO-,

$R^2$ is alkylene group of 2 to 4 carbon atoms, preferably 2 to 3 carbon atoms,

n is a number in the range of 1 to 100 on the average, preferably from 5 to 80 ,

$R^3$ is monovalent organic group selected from the class consisting of alkyl groups of 1 to 30 carbon atoms, alkenyl groups of 2 to 30 carbon atoms, aryl groups of 6 to 30 carbon atoms, aralkyl groups of 7 to 30 carbon atoms, cycloalkyl groups of 3 to 30 carbon atoms, cycloalkenyl groups of 3 to 30 carbon atoms, and heterocyclic compounds of 2 to 30 carbon atoms, preferably alkyl group of 1 to 20 carbon atoms, phenyl group, naphthyl group, alkylphenyl group having 1-3 alkyl groups of 1 to 10 carbon atoms as a substituent, benzyl group or pyridinyl group.

The organic compounds which are effectively usable as the alkoxy monomer (I) herein include methoxypolyethylene glycol mono(meth)acrylates, methoxypolypropylene glycol mono(meth)acrylates, methoxypolybutylene glycol mono(meth)acrylates, ethoxypolyethylene glycol mono(meth)acrylates, ethoxypolypropylene glycol mono(meth)acrylates, ethoxypolybutylene glycol mono(meth)acrylates, methoxypolyethylene glycol-polypropylene glycol mono(meth)acrylates, and other alkoxypolyalkylene glycol mono(meth)acrylates which are alkoxidized with alkyl groups of up to 30 carbon atoms; alkenoxypolyalkylene glycol mono(meth)acrylates alkenoxidized with alkenyl groups of up to 30 carbon atoms; aryloxypolyalkylene glycol mono(meth)acrylates such as phenoxypolyethylene glycol mono(meth)acrylates, naphthoxypolyethylene glycol mono(meth)acrylates, phenoxypolypropylene glycol mono(meth)acrylates, naphthoxypolyethylene glycol-polypropylene glycol mono(meth)acrylates, and p-methylphenoxypolyethylene glycol mono(meth)acrylates; aralkyloxypolyalkylene glycol mono(meth)acrylates such as benzyloxypolyethylene glycol mono(meth)acrylates; cyclic alkoxypolyalkylene glycol mono(meth)acrylates such as cyclohexoxypolyethylene glycol mono(meth)acrylates; cyclic alkenoxypolyalkylene glycol mono(meth)acrylates such as cyclopentenoxypolyethylene glycol mono (meth)acrylates; heterocyclic ethers of polyalkylene glycol mono(meth)acrylates such as pyridyloxypolyethylene glycol mono(meth)acrylates and thienyloxypolyethylene glycol mono(meth)acrylates; and unsaturated polycarboxylic acid monoesters of monoetherified polyalkylene glycols such as methoxypolypropylene glycol monomaleate, phenoxypolyethylene glycol monomaleate, naphthoxypolypropylene glycol monoitaconate, and phenoxypolyethylene glycol monoitaconate, for example. These organic monomers may be used either singly or in the form of a mixture of two or more members.

The carboxylic monomer (II) is represented by the general formula II and can be produced by the conventional method.

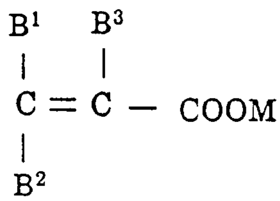

(II)

wherein $B^1$ and $B^2$ are independently hydrogen atom, methyl group, or -COOY, preferably hydrogen atom or -COOY, providing that $B^1$ and $B^2$ are not simultaneously -COOY,
$B^3$ is hydrogen atom, methyl group, -COOY, or $-CH_2COOY$, preferably hydrogen atom or methyl group, providing that $B^1$ and $B^2$ are independently hydrogen atom or methyl group when $B^3$ is -COOY or $-CH_2COOY$, and M and Y are independently hydrogen atom, alkali metal atom, alkaline earth metal atom, ammonium group, or alkylamine group, preferably hydrogen atom, sodium atom, potassium atom, ammonium group or alkanolamine group.

The compounds which are effectively usable as the carboxylic monomer (II) herein include acrylic acid, methacrylic acid, crotonic acid, itaconic acid, maleic acid, fumaric acid, and citraconic acid, and sodium, potassium, and other alkali metal salts, magnesium and calcium and other alkaline earth metal salts, ammonium salts, and alkylamines salts of the aforementioned acids, for example. These compounds may be used either singly or in the form of a mixture of two or more members.

The weight ratio of the amounts of the alkoxy monomer (I) and the carboxylic monomer (II), i.e. alkoxy monomer (I)/carboxylic monomer (II), is in the range of 0.5/99.5 to 15/85, preferably from 1/99 to 10/90. If these monomers are used in a ratio deviating from the range defined above, the produced copolymer fails to excel in the ability to enhance the dispersibility of coal in water to a fully satisfactory extent.

Besides the alkoxy monomer (I) and the carboxylic monomer (II) described above, other monomer copolymerizable with these monomers (hereinafter referred to briefly as "other monomer (III)") may be used when desired.

The compounds which are effectively usable as the other monomer (III) herein include esters such as methyl (meth)acrylates and monomethyl maleate which are obtained from the combination of unsaturated carboxylic acids such as (meth)acrylic acids and maleic acid with alcohol; various unsaturated sulfonic acids such as vinyl sulfonic acid, styrene sulfonic acid, allyl sulfonic acid, methallyl sulfonic acid, and 2-acrylamide-2-methylpropane sulfonic acid and monovalent metal salts, divalent metal salts, ammonium salts, and alkylamines salts of these acids; various (meth)acrylamides such as (meth)acrylamides and N-methylol (meth)acrylamides; aromatic vinyl compounds such as styrene and p-methyl styrene; and vinyl acetate, propenyl acetate, and vinyl chloride, for example.

The amount of the other monomer (III) to be used is less than 40% by weight, preferably in the range of

0 to 20 % by weight, based on the total amount of all the monomers used in the water-soluble copolymer. If this amount deviates from the range defined above, the produced copolymer suffers a decline in the ability to enhance the dispersibility of coal in water.

The water-soluble copolymer contemplated by this invention can be produced by copolymerizing the monomers described above by the use of a polymerization initiator. This copolymerization can be carried out by any of the known methods such as polymerization in a solvent and bulk polymerization.

The polymerization in a solvent may be performed either batchwise or continuously. The solvents which are effectively usable in this polymerization include water; lower alcohols such as methyl alcohol, ethyl alcohol, and isopropyl alcohol; aromatic, aliphatic, or heterocyclic aliphatic hydrocarbons such as benzene, toluene, xylene, cyclohexane, n-hexane, tetrahydrofuran, and dioxane; ester compounds such as ethyl acetate; and ketone compounds such as acetone and methylethyl ketone, for example. In point of solubility of the monomers as raw materials and the water-soluble copolymers, it is particularly desirable to use at least one member selected from the group consisting of water and lower alcohols of one to four carbon atoms among other solvents mentioned above.

In the case of the method of polymerization using water as a solvent, such a water-soluble polymerization initiator as ammonium or alkali metal persulfate or hydrogen peroxide is used for initiating the polymerization. In this case, a promoter such as, for example, sodium hydrogen sulfite may be used in combination with the polymerization initiator. When a lower alcohol, an aromatic hydrocarbon, an aliphatic hydrocarbon, an ester compound, or a ketone compound is used as the solvent, the polymerization initiators which are effectively usable for the polymerization include peroxides such benzoyl peroxide and lauroyl peroxide; hydroperoxides such as cumene hydroperoxide; and aliphatic azo compounds such as azobisisobutyronitrile, for example. In this case, a promoter such as, for example, an amine compound may be used in combination with the polymerization initiator. When a mixed solvent consisting of water and a lower alcohol is used, a polymerization initiator and optionally a promoter may be suitably selected from among the various polymerization initiators mentioned above and the various combinations of such polymerization initiators with promoters mentioned above. The amount of the polymerization initiator to be used for the polymerization is in the range of 0.1 to 10 % by weight, preferably from 0.2 to 5 % by weight, based on the total amount of all the monomers to be copolymerized.

Though the polymerization temperature is suitably fixed depending on the kind of solvent and the kind of polymerization initiator to be used, it is generally in the range of 0° to 120°C, preferably from 20 to 100°C.

In the case of the bulk polymerization, the polymerization initiator is one member selected from the group consisting of peroxides such as benzoyl peroxide and lauroyl peroxide; hydroperoxides such as cumene hydroperoxide; and aliphatic azo compounds such as azobisisobutyronitrile and the polymerization temperature is in the range of 40° to 150°C, preferably 60° to 130°C. The amount of the polymerization initiator is in the range of 0.1 to 10 % by weight, preferably 0.2 to 5 % by weight based on the total amount of all the monomers to be copolymerized.

The molecular weight of the water-soluble copolymer which is obtained as described above may vary widely generally in the range of 1,000 to 500,000. Particularly, in point of the quality of the water-soluble copolymer as an additive for coal-water slurry, the molecular weight is desired to be in the range of 5,000 to 300,000.

Then, the (b) component of the additive composition of this invention for coal-water slurry is an electrolytic compound of which the anion moiety has a chemical formula weight of not more than 500, preferably in the range of 40 to 400, and the anion moiety has a chemical formula weight of not more than 100, preferably in the range of 30 to 80, per electric charge. The electrolytic compounds which are effectively usable as the (b) component herein include carboxylic acids such as acetic acid, propionic acid, oxalic acid, malonic acid, and succinic acid; hydroxycarboxylic acids such as glycolic acid, hydroxypropionic acid, tartronic acid, malic acid, citric acid, and tartaric acid; amino acids such as glycine and alanine; iminocarboxylic acids such as iminodiacetic acid, nitrilotriacetic acid, and ethylenediamine tetraacetic acid; sulfonic acid derivatives such as methanesulfonic acid and methanedisulfonic acid; and inorganic acids such as carbonic acid, sulfuric acid, silicic acid, phosphoric acid, pyrophosphoric acid, and tripolyphosphoric acid and alkali metal salts, alkaline earth metal salts, ammonium salts, and amine salts of these electrolytic compounds, for example.

In point of the capability of efficiently converting coal of a high ash content into slurry in water, it is particularly preferable to use at least one electrolytic compound selected from the group consisting of the carboxylic acids, the hydroxycarboxylic acids, the iminocarboxylic acids, pyrophosphoric acid, tripolyphosphoric acid, and alkali metal salts, alkali earth metal salts, ammonium salts and amine salts of these electrolytic compounds cited above.

The additive composition of this invention contains the (a) component and (b) component as essential components thereof. Though the optimum mixing ratio of these components, i.e. (a) component/(b) component, is variable with the kind of coal to be used, it is generally in the range of 99/1 to 1/99, preferably 95/5 to 20/80.

The amount of the additive composition of this invention for coal-water slurry to be used is not particularly restricted. It can be used effectively in an amount variable in a wide range. From the economic point of view, the additive composition is used in such an amount that the (a) component accounts for a proportion in the range of 0.02 to 2% by weight, preferably 0.1 to 1% by weight, and the (b) component accounts for a proportion in the range of 0.02 to 2% by weight, preferably 0.02 to 0.5% by weight, based on the weight of coal powder (on dry basis).

The use of the additive composition of this invention in coal-water slurry may be attained either by mixing this additive composition with coal and converting the produced mixture into slurry in water or by preparing a solution of the additive composition in water and converting coal into slurry in the produced solution. Of course, the incorporation of the additive composition in the slurry may be effected all at once or piecemeal. Further, the (a) component and the (b) component may be mixed wholly in a stated ratio prior to incorporation or may be incorporated separately of each other. By reason of the nature of the additive composition, the device for conversion of coal into slurry in water may be any of the conventional devices available at all for production of coal-water slurry. The scope of this invention is not restricted by the method of incorporation of the additive composition or by the method of conversion of coal into slurry in water.

The additive composition of the present invention for coal-water slurry, when necessary, may additionally incorporate therein precipitation inhibitor, rustproofing agent, corrosionproofing agent, pH adjusting agent, antioxidant, defoaming agent, antistatic agent, solubilizing agent, etc.

When the additive composition of this invention for coal-water slurry is used in combination with a pH adjusting agent, the pH value of coal-water slurry generally exceeds 4 and is preferably desired to be in the range of 7 to 10.

Now, the additive composition of this invention for coal-water slurry will be described more specifically below with reference to controls and working examples. It should be noted, however, that the present invention is not limited to these examples. Wherever parts and percents are mentioned in the following examples, they are to be construed as referring to parts by weight and percents by weight unless otherwise specified.

Synthesis 1

In a reaction vessel of glass fitted with a thermometer, a stirrer, two dropping funnels, a gas inlet tube, and a reflux condenser, 200 parts of water was placed, stirred simultaneously with displacement of the entrapped air with nitrogen, and then heated to 95°C in an atmosphere of nitrogen. Then, a monomer mixed solution comprising 6 parts of methoxypolyethylene glycol monoacrylate (average additional mol number of ethylene oxide is 15), 194 parts of sodium methacrylate, and 350 parts of water, and 20 parts of aqueous 5% ammonium persulfate solution were independently added to the reaction vessel over a period of 120 minutes. After this addition was completed, 20 parts g of an aqueous 5% ammonium persulfate solution was added to the reaction vessel over a period of 20 minutes. After the addition of the monomers was completed, the temperature of the reaction system was kept at the 95°C thereof for 120 minutes to complete polymerization of the monomers and produce a copolymer (1).

Synthesis 2

In the same reaction vessel as used in Synthesis 1, 200 parts of water was placed, stirred simultaneously with displacement of the entrapped air with nitrogen, and heated to 95°C in an atmosphere of nitrogen. Then, a monomer mixed solution comprising 8 parts of ethoxypolyethylene glycol monomethacrylate (average additional mol number of ethylene oxide is 50), 192 parts of ammonium acrylate and 350 parts of water, and 45 parts of aqueous 5% ammonium persulfat solution were independently added thereto over a period of 120 minutes. After the addition was completed, 20 parts of an aqueous 5% ammonium persulfate solution was added over a period of 20 minutes. After the addition of the monomers was completed, the temperature of the reaction system was kept at 95°C for 120 minutes to complete polymerization of the monomers and produce a copolymer (2).

Synthesis 3

In the same reaction vessel as used in Synthesis 1, 200 parts of water was placed, stirred simultaneously with displacement of the entrapped air with nitrogen, and heated to 95°C in an atmosphere of nitrogen. Then, a monomer mixed solution comprising 10 parts of phenoxypolyethylene glycol monomethacrylate (average additional mol number of ethylene oxide is 10), 95 parts of sodium methacrylate, 95 parts of sodium acrylate and 350 parts of water, and 40 parts of aqueous 5% ammonium persulfate solution were independently added

to the reaction vessel over a period of 120 minutes. After the addition was completed, 10 parts of an aqueous 5% ammonium persulfate solution was added thereto over a period of 20 minutes. After the addition of the monomers was completed, the temperature of the reaction system was kept at 95°C for 120 minutes to complete polymerization of the monomers and produce a copolymer (3).

Synthesis 4

In the same reaction vessel as used in Synthesis 1, 200 parts of water was placed, stirred simultaneously with displacement of the entrapped air with nitrogen, and heated to 95°C in an atmosphere of nitrogen. Then, a monomer mixed solution comprising 14 parts of methoxypolyethylene glycol monoacrylate (average additional mol number of ethylene oxide is 70), 74.4 parts of sodium methacrylate, 111.6 parts of sodium acrylate, and 350 parts of water, and 15 parts of aqueous 5% ammonium persulfate solution were independently added to the reaction vessel over a period of 120 minutes. After this addition was completed, a 50 parts of an aqueous 5% ammonium persulfate solution was added to the reaction vessel over a period of 20 minutes. After the addition of the monomers was completed, the temperature of the reaction vessel was kept at 95°C for 120 minutes to complete polymerization of the monomers and produce a copolymer (4).

Synthesis 5

In the same reaction vessel as used in Synthesis 1, 200 parts of water was placed, stirred simultaneously with displacement of the entrapped air with nitrogen, and heated to 95°C in an atmosphere of nitrogen. Then, a monomer mixed solution comprising 8 parts of dodecoxypolyethylene glycol monomethacrylate (average additional mol number of ethylene oxide is 50), 192 parts of sodium acrylate and 350 parts of water, and 42.5 50 parts of an aqueous 5% ammonium persulfate solution were separately added thereto over a period of 120 minutes. After the addition was completed, 10 parts of an aqueous 5% ammonium persulfate solution was added thereto over a period of 30 minutes and produce a copolymer (5).

Synthesis 6

In the same reaction vessel as used in Synthesis 1, 200 parts of water was placed, stirred simultaneously with displacement of the entrapped air with nitrogen, and heated to 95°C in an atmosphere of nitrogen. Then, a monomer mixed solution comprising 4 parts of naphthoxypolyethylene glycol monocrotonate (average additional mol number of ethylene oxide is 10), 98 parts of sodium methacrylate, 98 parts of sodium acrylate, and 360 parts of water and 30.0 parts of an aqueous 5% ammonium persulfate solution were separately added thereto over a period of 120 minutes. After the addition was completed, 10 parts of an aqueous 5% ammonium persulfate solution was added thereto over a period of 20 minutes. After the addition of the monomers was completed, the temperature of the reaction system was kept at 95°C for 120 minutes to complete polymerization of the monomers and produce a copolymer (6).

Synthesis 7

In the same reaction vessel as used in Synthesis 1, 350 parts of isopropyl alcohol (hereinafter referred to briefly as "IPA") was placed, stirred simultaneously with displacement of the entrapped air with nitrogen, and heated to the boiling point in an atmosphere of nitrogen. Then, a mixture comprising 2.6 parts of benzyloxypolyethylene polypropylene glycol monomethacrylate (average additional mol number of ethylene oxide is 10 and average additional mol number of propylene oxide is 5) and 197.4 parts of acrylic acid and a mixture comprising 3.44 parts of azobisisobutyronitrile and 240 parts of IPA were separately added thereto over a period of 120 minutes. After this addition was completed, a solution of 0.60 part of azobisisobutyronitrile in 10 parts of IPA was added thereto over a period of 30 minutes. After the addition of the monomers was completed, the temperature of the reaction system was kept at the boiling point for 120 minutes to complete polymerization of the monomers. Then, the reaction system was completely neutralized with an aqueous sodium hydroxide solution and distilled to expel the IPA and produce a copolymer (7).

Synthesis 8

In the same reaction vessel as used in Synthesis 1, 200 parts of water was placed, stirred simultaneously with displacement of the entrapped air with nitrogen, and heated to 95°C in an atmosphere of nitrogen. Then, a monomer mixed solution comprising 16 parts of pyridyloxypolyethylene glycol monomethacrylate (average

additional mol number of ethylene oxide is 10), 165.6 parts of sodium acrylate, 18.4 parts of disodium maleate, and 350 parts of water and 33 parts of an aqueous 5% ammonium persulfate were separately added thereto over a period of 120 minutes. After the addition was completed, 17 parts of an aqueous 5% ammonium persulfate solution was added thereto over a period of 20 minutes. After the addition of the monomers was completed, the temperature of the reaction system was kept at 95°C for 120 minutes to complete polymerization of the monomers and produce a copolymer (8).

Synthesis 9

In the same reaction vessel as used in Synthesis 1, 200 parts of water was placed, stirred simultaneously with displacement of the entrapped air with nitrogen, and heated to 95°C in an atmosphere of nitrogen. Then, a monomer mixed solution comprising 10 parts of phenoxypolyethylene glycol monomaleate monosodium salt (average additional mol number of ethylene oxide is 10), 170 parts of sodium methacrylate, 20 parts of 2-acrylamide-2-methylpropane sodium sulfonate, and 360 parts of water and 36.5 parts of an aqueous 5% ammonium persulfate solution were separately added thereto over a period of 120 minutes. After this addition was completed, 3.5 parts of an aqueous 5% ammonium persulfate solution was added thereto over a period of 20 minutes. After the addition of the monomers was completed, the temperature of the reaction system was kept at 95°C for 120 minutes to complete polymerization of the monomers and produce a copolymer (9).

Synthesis 10

In the same reaction vessel as used in synthesis 1, 60 parts of tetrahydrofuran (hereinafter referred to THF) was placed, stirred simultaneously with displacement of the entrapped air with nitrogen, and heated to 40°C in an atmosphere of nitrogen. Then, a monomer mixed solution comprising 6 parts of phenoxypolyethylene glycol monoacrylate (average additional mol number of ethylene oxide is 10), 43.2 parts of acrylic acid and 30 parts of THF was added thereto over a period of 120 minutes and at the same time, a mixed solution comprising 2.2 parts of azobisisobutylonitrile and 140 parts of THF was added thereto over a period of 240 minutes. After the addition of the monomers was completed, polymerization reaction was continued at the same temperature for 30 minutes and then cooled down. Then the reaction solution was neutralized with aqueous monoethanol amine solution and removed THF to produce a copolymer (10)

Synthesis 11

In the same reaction vessel as used in Synthesis 1, 200 parts of water was placed, stirred simultaneously with displacement of the entrapped air with nitrogen, and heated to 95°C in an atmosphere of nitrogen. Then, a monomer mixed solution comprising 12 parts of methoxypolyethylene glycol monoacrylate (average additional mol number of ethylene oxide is 20), 75.2 parts of potassium methacrylate, 112.8 parts of potassium acrylate, and 360 parts of water and 30.0 parts of an aqueous 5% ammonium persulfate solution were separately added thereto over a period of 120 minutes. After the addition was completed, 10 parts of an aqueous 5% ammonium persulfate solution was added thereto over a period of 20 minutes. After the addition of the monomers was completed, the temperature of the reaction system was kept at 95°C for 120 minutes to complete polymerization of the monomers and produce a copolymer (11).

Control Synthesis 1

In the same reaction vessel as used in Synthesis 1, 200 parts of water was placed, stirred simultaneously with displacement of the entrapped air with nitrogen, and heated to 95°C in an atmosphere of nitrogen. Then, a mixture comprising 50 parts of methoxypolyethylene glycol monoacrylate (average additional mol number of ethylene oxide is 15), 150 parts of sodium methacrylate and 350 parts of water, and 38 parts of aqueous 5% ammonium persulfate solution were independently added thereto over a period of 120 minutes. After this addition was completed, 10 parts of aqueous 5% ammonium persulfate solution was added thereto over a period of 30 minutes. After the addition of the monomers was completed, the temperature of the reaction system was kept at 95°C for 120 minutes to complete polymerization of the monomers to produce a copolymer (1) for comparison.

Control Synthesis 2

In the same reaction vessel as used in Synthesis 1, 350 parts of IPA was placed, stirred simultaneously

with displacement of the entrapped air with nitrogen, and heated to the boiling point in an atmosphere of nitrogen. Then, a monomer mixed solution consisting of 0.5 part of phenoxypolyethylene glycol monoacrylate (average additional mol number of ethylene oxide is 10) and 199.5 parts of methacrylic acid, and a mixture comprising 2.4 parts of azobisisobutyronitrile and 240 parts of IPA was added thereto over a period of 120 minutes. After this addition was completed, a mixture of 0.8 part of azobisisobutyronitrile and 10 parts of IPA was added thereto over a period of 20 minutes. After the addition of the monomers was completed, the temperature of the reaction system was kept at the boiling point for 120 minutes to complete polymerization of the monomers. Then, the reaction system was completely neutralized with an aqueous caustic soda solution and distilled to expel the IPA and produce a copolymer (2) for comparison.

Control Synthesis 3

In the same reaction vessel as used in Synthesis 1, 200 parts of water was placed, stirred simultaneously with displacement of the entrapped air with nitrogen, and heated to 95°C in an atmosphere of nitrogen. Then, a mixed solution comprising 8.0 parts of dodecoxypolyethylene glycol monomethacrylate (average additional mol number of ethylene oxide is 50), 192 parts of sodium acrylate, and 350 parts of water and 35 parts of an aqueous 5% ammonium persulfate solution were separately added thereto over a period of 120 minutes. After this addition was completed, 10 parts of an aqueous 5% ammonium persulfate solution was added thereto over a period of 30 minutes. After the addition on the monomers was completed, the temperature of the reaction system was kept at 95°C for 120 minutes to complete polymerization of the monomers and produce a copolymer (3) for comparison.

Control Synthesis 4

In the same reaction vessel as used in Synthesis 1, 200 parts of water was placed, stirred simultaneously with displacement of the entrapped air with nitrogen, and heated to 95°C in an atmosphere of nitrogen. Then, a mixed solution comprising 4 parts of naphthoxypolyethylene glycol monocrotonate (average additional mol number of ethylene oxide is 10), 98 parts of sodium methacrylate, 98 parts of sodium acrylate and 360 parts of water, and 20 parts of an aqueous 5% ammonium persulfate were separately added thereto over a period of 120 minutes. After this addition was completed, 10 parts of an aqueous 5% ammonium persulfate solution was added thereto over a period of 20 minutes. After the addition of the monomers was completed, the temperature of the reaction system was kept at 95°C for 120 minutes to complete polymerization of the monomers and produce a copolymer (4) for comparison.

Control Synthesis 5

In the same reaction vessel as used in Synthesis 1, 200 parts of water was placed, stirred simultaneously with displacement of the entrapped air with nitrogen, and heated to 95°C in an atmosphere of nitrogen. Then, a monomer mixed solution comprising 10 parts of phenoxypolyethylene glycol monomaleate monosodium salt (average additional mol number of ethylene oxide is 10), 170 parts of sodium methacrylate, 20 parts of 2-acrylamide-2-methylpropane sodium sulfonate, and 350 parts of water and 36.5 parts of an aqueous 5% ammonium persulfate solution were separately added thereto over a period of 120 minutes. After this addition was completed, 13.5 parts of an aqueous 5% ammonium persulfate solution was added thereto over a period of 20 minutes. After the addition of the monomers was completed, the temperature of the reaction system was kept at 95°C for 120 minutes to complete polymerization of the monomers and produce a copolymer (5) for comparison.

Control Synthesis 6

In the same reaction vessel as used in Synthesis 1, a solution of 360 parts of ethylene dichloride (hereinafter referred to briefly as "EDC") in 250 parts of styrene was stirred in an atmosphere of nitrogen and kept at a temperature of 25°C. This solution thus kept stirred at this temperature and 5 parts of sulfuric acid added thereto were stirred for five hours. Then, the resultant mixture and 350 parts of sulfuric acid added thereto were refluxed for reaction with sulfuric acid for 10 hours. After the completion of this reaction, the reaction system was completely neutralized, then distilled to expel the EDC, and subjected to ultrafiltration to expel sodium sulfate and produce a copolymer (6) for comparison.

Control Synthesis 7

In the same reaction vessel as used in Synthesis 1, a mixture of 100 parts of naphthalenesulfonic acid with 100 parts of ligninsulfonic acid and 130 parts of 30% formalin added thereto was heated up to 100°C and kept at this temperature for 12 hours to induce condensation. After the reaction was completed, the reaction system was diluted with water, neutralized with an aqueous caustic soda solution, and subjected to ultrafiltration to expel sodium sulfate and produce a copolymer (7) for comparison.

Examples 1 to 11

To the aqueous solutions prepared so as to contain in the amounts indicated in Table 2 and Table 3 the additive comprising (b) component and copolymers (1) to (11) obtained by the procedures of Syntheses 1 to 11 using alkoxy monomers (I), carboxylic monomers (II), and other monomers (III) indicated in Table 1, the coal (possessing the attributes shown in Table 4) pulverized to acquire a particle size distribution such that the particles of 200-mesh pass accounted for a proportion of 80% was added piecemeal in a stirred state at normal room temperature. After the coal had been added until the coal concentrations in the aqueous solutions reached the totals indicated in Table 2 and Table 3, the aqueous solutions containing the coal were stirred in a mixture (produced by Tokushuki Kako K.K. and marketed under trademark designation of "Homomixer") at 5,000 rpm for three minutes, to afford coal-water slurries. The coal-water slurries were tested for viscosity at 25°C by way of evaluation of flowability. The results of evaluation made immediately after and one month after the preparation of the coal-water slurries are shown respectively in Table 2 and Table 3. The magnitudes of viscosity shown in these tables decrease with increasing desirability of flowability.

Controls 1 to 8

The coal-water slurries for comparison were prepared, omitting use of a copolymer in one test run and using in the rest of test runs copolymers (1) to (7) obtained by the procedures of Control Syntheses 1 to 7 for comparison using compositions not fulfilling the essential conditions of this invention. They were similarly tested and evaluated. The results are shown in Table 2 and Table 3.

Table 1

| | Additive | | | | | | | | | | | | | |
|---|---|---|---|---|---|---|---|---|---|---|---|---|---|---|
| | (a) component | | | | | | | | | | | (b) component | | Ratio of component (a) component/ (b) component |
| | alkoxy monomer ( I ) $\overset{A^1}{C}A^2=\overset{A^3}{C}-R^1-O-(R^2-O)n-R^3$ | | | | | | | carboxylic monomer ( II ) | Other monomer ( III ) | Composition of monomer monomer( I )/ monomer( II )/ monomer( III )/ | Average molecular weight | Kind | Counter ion | |
| | $A^1$ | $A^2$ | $A^3$ | $R^1$ | $R^2$ | n | $R^3$ | | | | | | | |
| Example 1 | H | H | H | CO | $C_2H_4$ | 15 | $CH_3$ | SMA | - | 3/97/0 | 50,000 | malonic acid | Na | 85/15 |
| 2 | H | H | $CH_3$ | CO | $C_2H_4$ | 60 | $C_2H_6$ | AA | - | 4/96/0 | 100,000 | citric acid | $NH_3$ | 50/50 |
| 3 | H | H | $CH_3$ | CO | $C_2H_4$ | 10 | phenyl | SMA/SA (50/50)*1 | - | 5/95/0 | 30,000 | tripolyphosphoric acid | Na | 70/30 |
| 4 | H | H | H | CO | $C_2H_4$ | 70 | $CH_3$ | SMA/SA (40/60)*1 | - | 7/93/0 | 150,000 | EDTA*2 | Na | 60/40 |
| 5 | H | H | $CH_3$ | CO | $C_2H_4$ | 50 | $C_{12}H_{25}$ | SA | - | 4/96/0 | 60,000 | tartronic acid | - | 95/5 |
| 6 | $CH_3$ | H | H | CO | $C_2H_4$ | 10 | naphthyl | SMA/SA (50/50)*1 | - | 2/98/0 | 80,000 | acetic acid | Na | 55/45 |
| 7 | H | H | $CH_3$ | CO | $C_2H_4$ | 10 | benzyl | SA | - | 1/99/0 | 10,000 | pyrophosphoric acid | K | 20/80 |
| | | | | | $C_2H_4$ | 5 | | | | | | | | |
| 8 | H | H | $CH_3$ | CO | $C_2H_4$ | 10 | pyridyl | SA/SM (90/10)*1 | - | 8/92/0 | 50,000 | NTA*3 | $NH_3$ | 75/25 |
| 9 | $CO_2Na$ | H | H | CO | $C_2H_4$ | 10 | phenyl | SMA | SAMS | 5/85/10 | 50,000 | succinic acid | K | 75/25 |
| 10 | H | H | H | CO | $C_2H_4$ | 10 | phenyl | MEAA | - | 7/93 | 70,000 | malonic acid | Na | 60/40 |
| 11 | H | H | H | CO | $C_2H_4$ | 20 | $CH_3$ | PMA/PA (40/60)*1 | - | 6/94 | 20,000 | tripolyphosphoric acid | Na | 80/20 |
| Control 1 | - | - | - | - | - | - | - | - | - | - | - | citric acid | $NH_3$ | 0/100 |
| 2 | H | H | H | CO | $C_2H_4$ | 15 | $CH_3$ | SMA | - | 25/75/0 | 50,000 | pyrophosphoric acid | K | 50/50 |
| 3 | H | H | H | CO | $C_2H_4$ | 10 | phenyl | SMA | - | 0.2/99.8/0 | 50,000 | succinic acid | K | 70/30 |
| 4 | H | H | $CH_3$ | CO | $C_2H_4$ | 50 | $C_{12}H_{25}$ | SA | - | 4/96/0 | 60,000 | - | - | 100/0 |
| 5 | $CH_3$ | H | H | CO | $C_2H_4$ | 10 | naphthyl | SMA/SA (50/50)*1 | - | 2/98/0 | 80,000 | polyacriylic acid(MW5000) | Na | 60/40 |
| 6 | $CO_2Na$ | H | H | CO | $C_2H_4$ | 10 | phenyl | SMA | SAMS | 5/85/10 | 50,000 | benzoic acid | Na | 80/20 |
| 7 | Partial sulfonate of polystyrene, sulfonation degree per styrene unit 80 %(MW 70,000) | | | | | | | | | | | tartronic acid | Na | 75/25 |
| 8 | Lignin sulfonic acid-naphthalene sulfonic acid-formaldehyde condensate (weight ratio 5/5) (condensation degree 10) | | | | | | | | | | | tripolyphosphoric acid | Na | 80/20 |

*1 weight ratio *2 ethylenediamine tetraacetic acid *3 nitrilo triacetic acid

SMA: sodium methacrytate
AA: ammonium acrylate
SA: sodium acrylate
SM: sodium maleate
SAMS: sodium 2-acrylamide-2-methyl-propane sulfonate
MEAA: monoethanolamine acrylate 2-hydroxyethyl ammonium acrylate
PMA: potassium methacrylate
PA: potassium acrylate

Table 2

| | Additive used Kind | Amount of additive used (weight % per slurry) | Properties of coal (1) - water slurry | | | | |
|---|---|---|---|---|---|---|---|
| | | | Concentration of coal (wt.%) | Immediately after preparation | | 1 month after preparation | |
| | | | | Viscosity of slurry (cps) | Flowability (Note) | Viscosity of slurry (cps) | Flowability (Note) |
| Example | Additive (1) | 0.4 | 68 | 1200 | ○ | 1200 | ○ |
| | Additive (2) | 0.4 | 69 | 1150 | ○ | 1150 | ○ |
| | Additive (3) | 0.4 | 68 | 1100 | ○ | 1200 | ○ |
| | Additive (4) | 0.3 | 69 | 1300 | ○ | 1300 | ○ |
| | Additive (5) | 0.3 | 69 | 1030 | ○ | 1050 | ○ |
| | Additive (6) | 0.4 | 68 | 1200 | ○ | 1200 | ○ |
| | Additive (7) | 0.4 | 69 | 1310 | ○ | 1400 | ○ |
| | Additive (8) | 0.3 | 69 | 1200 | ○ | 1200 | ○ |
| | Additive (9) | 0.3 | 68 | 1400 | ○ | 1450 | ○ |
| | Additive (10) | 0.4 | 68 | 1200 | ○ | 1250 | ○ |
| | Additive (11) | 0.4 | 69 | 1100 | ○ | 1100 | ○ |
| Control | Control additive (1) | 0.8 | 63 | >10000 | × | >10000 | × |
| | Control additive (2) | 0.8 | 63 | >10000 | × | >10000 | × |
| | Control additive (3) | 1.0 | 63 | >10000 | × | >10000 | × |
| | Control additive (4) | 0.7 | 64 | 1500 | ○ | 5500 | × |
| | Control additive (5) | 0.7 | 63 | 1350 | ○ | 6200 | × |
| | Control additive (6) | 0.7 | 63 | 1400 | ○ | 5800 | × |
| | Control additive (7) | 0.7 | 64 | 1230 | ○ | 5300 | × |
| | Control additive (8) | 0.7 | 63 | 1300 | ○ | 6700 | × |

(Note) Scale of rating - ○ for acceptable and × for not acceptable

Table 3

| | Additive used | Amount of additive used (weight % per slurry) | Properties of coal (2) - water slurry | | | | |
|---|---|---|---|---|---|---|---|
| | | | Concentration of coal (wt.%) | Immediately after preparation | | 1 month after preparation | |
| | Kind | | | Viscosity of slurry (cps) | Flowability (Note) | Viscosity of slurry (cps) | Flowability (Note) |
| Example | Additive (1) | 0.3 | 71 | 1300 | ○ | 1300 | ○ |
| | Additive (2) | 0.4 | 69 | 1250 | ○ | 1260 | ○ |
| | Additive (3) | 0.3 | 70 | 1200 | ○ | 1200 | ○ |
| | Additive (4) | 0.3 | 70 | 1120 | ○ | 1140 | ○ |
| | Additive (5) | 0.4 | 69 | 1200 | ○ | 1210 | ○ |
| | Additive (6) | 0.3 | 71 | 1400 | ○ | 1400 | ○ |
| | Additive (7) | 0.4 | 71 | 1300 | ○ | 1330 | ○ |
| | Additive (8) | 0.4 | 69 | 1150 | ○ | 1150 | ○ |
| | Additive (9) | 0.3 | 70 | 1000 | ○ | 1020 | ○ |
| | Additive (10) | 0.4 | 69 | 1300 | ○ | 1320 | ○ |
| | Additive (11) | 0.3 | 70 | 1150 | ○ | 1200 | ○ |
| Control | Control additive (1) | 0.8 | 63 | >10000 | × | >10000 | × |
| | Control additive (2) | 0.8 | 63 | >10000 | × | >10000 | × |
| | Control additive (3) | 1.0 | 63 | >10000 | × | >10000 | × |
| | Control additive (4) | 0.3 | 66 | 1350 | ○ | 2200 | × |
| | Control additive (5) | 0.4 | 67 | 1300 | ○ | 2120 | × |
| | Control additive (6) | 0.4 | 66 | 1400 | ○ | 2350 | × |
| | Control additive (7) | 0.4 | 66 | 1320 | ○ | 2450 | × |
| | Control additive (8) | 0.4 | 66 | 1420 | ○ | 2600 | × |

(Note) Scale of rating - ○ for acceptable and × for not acceptable

Table 4

| Item of test | Displayed base | Analyses of coal (1) | Analyses of coal (2) |
|---|---|---|---|
| High-grade calorific value (kcal/kg) | Constant humidity base | 6,600 | 6,900 |
| Moisture content (%) | ibid | 3.8 | 3.5 |
| Ash content (%) | ibid | 23.8 | 12.3 |
| Volatile content (%) | ibid | 28.2 | 29.6 |
| Fixed carbon (%) | ibid | 51.5 | 53.2 |
| Fuel ratio (%)* | — | 1.83 | 1.80 |

* Fuel ratio = fixed carbon ÷ volatile content

## Claims

1. An additive composition for use in a highly concentrated coal-water slurry, having as essential components thereof

   (a) a water-soluble copolymer obtained by using as essential components (I) at least one polyalkyleneglycol group-containing monomers represented by the general formula I:

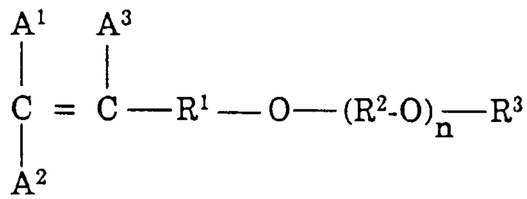

(I)

wherein $A^1$ and $A^2$ are independently hydrogen atom, methyl group, or -COOX, providing that $A^1$ and $A^2$ are not simultaneously -COOX,

$A^3$ is a hydrogen atom, methyl group, -COOX, or $-CH_2COOX$, providing that $A^1$ and $A^2$ are independently hydrogen atom or methyl group when $A^3$ is -COOX or $-CH_2COOX$,

$R^1$ is -CO- or $-CH_2CO-$,

$R^2$ is alkylene group of 2 to 4 carbon atoms, n is number in the range of 1 to 100 on the average,

$R^3$ is a monovalent organic group selected from the class consisting of alkyl groups of 1 to 30 carbon atoms, alkenyl groups of 2 to 30 carbon atoms, aryl groups of 6 to 30 carbon atoms, aralkyl groups of 7 to 30 carbon atoms, cycloalkyl groups of 3 to 30 carbon atoms, cycloalkenyl groups of 3 to 30 carbon atoms, and heterocyclic compounds of 2 to 30 carbon atoms, and

X is hydrogen atom, alkali metal atom, alkaline earth metal atom, ammonium group, or alkylamines group and

(II) at least one unsaturated carboxylic acid monomers represented by the general formula II:

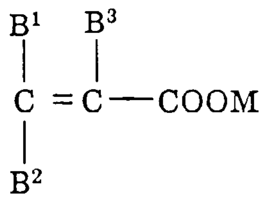

(II)

wherein $B^1$ and $B^2$ are independently hydrogen atom, methyl group, or -COOY, providing that $B^1$ and $B^2$ are not simultaneously -COOY,

$B^3$ is hydrogen atom, methyl group, -COOY, or $-CH_2COOY$, providing that $B^1$ and $B^2$ are independently hydrogen atom or methyl group when $B^3$ is -COOY or $-CH_2COOY$, and

M and Y are independently hydrogen atom, alkali metal atom, alkaline earth metal atom, ammonium group, or alkylamine group, in a weight ratio of said polyalkyleneglycol group-containing monomer (I) to said unsaturated carboxylic acid monomer (II), i.e. polyalkylenglycol group containing monomer (I)/unsaturated carboxylic acid monomer (II), in the range of 0.5/99.5 to 15/85, in a total amount of said polyalkylenglycol group-containing monomer (I) and said unsaturated carboxylic acid monomer (II) accounting for a proportion of not less than 60% by weight of the total of all the monomers used in the water soluble copolymer and

(b) an electrolytic compound of which the anion moiety has a chemical formula weight of not more than 500 and the anion moiety has a chemical formula weight of not more than 100 per electric charge.

2. A composition according to claim 1, wherein an average molecular weight of said water-soluble copolymer (a) is in the range of from 5,000 to 300,000.

3. A composition according to claim 1 or 2, wherein said unsaturated carboxylic acid monomer (II) is at least one member selected from the group consisting of maleic acid, (meth) acrylic acid, and an alkali salt, an alkaline earth metal salt, an ammonium salt and an alkylamine salt thereof.

4. A composition according to claim 1 or 2, wherein said unsaturated carboxylic acid monomer (II) is at least one member selectd from the group consisting of maleic acid, (meth) acrylic acid, and sodium salt, potassium salt, ammonium salt and alkanolamine salt thereof.

5. A composition according to any one of claims 1 to 4, wherein said alkylene glycol group-containing monomer (I) is at least one member selected from the group consisting of monocrotonate, monomaleate and mono (meth) acrylate, wherein $R^2$ is ethylene group or propylene group, n is a number in the range of 5 to 80 on the average, and $R^3$ is at least one member selected from the group consisting of alkyl group of 1 to 20 carbon atoms, phenyl group, naphthyl group, alkylphenyl group having 1 to 3 alkyl group of 1 to 10 carbon atoms as a substituent, benzyl and pyridinyl group.

6. A composition according to any one of claims 1 to 5, wherein the weight ratio of said polyalkyleneglycol group-containing monomer (I) to said unsaturated carboxylic acid monomer (II), i.e. alkyleneglycol group-containing monomer (I)/unsaturated carboxylic acid monomer (II), is 1/99 to 10/90.

7. A composition according to claim 1, wherein said (b) component is at least one member selected from the group consisting of carboxylic acids, hydroxycarboxylic acids, iminocarboxylic acids, pyrophosphoric acid, tripolyphosphoric acid, and alkali metal salts, alkaline earth metal salts, ammonium salts and amine salts thereof.

8. A composition according to claim 1, wherein the weight ratio of said water-soluble copolymer (a) to said electrolytic compound (b), i.e. water-soluble copolymer (a)/electrolytic compound (b) is 99/1 to 1/99.

9. A coal-water slurry composition produced by combining coal-water slurry with an additive composition set forth in claim 1.

10. A composition according to claim 9, wherein said (a) component accounts for a proportion in the range of 0.02 to 2% by weight and said (b) component for a proportion in the range of from 0.02 to 2% by weight, respectively based on the weight of coal powder (on dry basis).

11. A composition according to claim 10, wherein the concentration of coal in said coal-water slurry composition is in the range of 40 to 90 % by weight.

**Patentansprüche**

1. Additivzusammensetzung zur Verwendung in einer hochkonzentrierten Kohle- Wasser-Aufschlämmung, die als wesentliche Bestandteile aufweist

(a) ein wasserlösliches Copolymer, welches dadurch erhalten worden ist, daß verwendet werden als wesentliche Bestandteile

(I) mindestens ein polyalkylenglykolgruppenhaltiges Monomer, dargestellt durch die allgemeine Formel I:

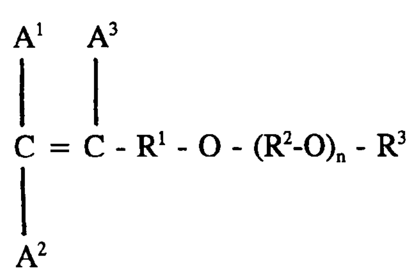

(I)

worin $A^1$ und $A^2$ unabhängig ein Wasserstoffatom, eine Methylgruppe oder -COOX sind, vorausgesetzt, daß $A^1$ und $A^2$ nicht gleichzeitig -COOX sind,
$A^3$ ein Wasserstoffatom, eine Methylgruppe, -COOX oder $-CH_2COOX$ ist, vorausgesetzt, daß $A^1$ und $A^2$ unabhängig ein Wasserstoffatom oder eine Methylgruppe sind, wenn $A^3$ -COOX oder $-CH_2COOX$ ist,
$R^1$ -CO- oder $-CH_2CO-$ ist,
$R^2$ eine Alkylengruppe mit 2 bis 4 Kohlenstoffatomen ist, n im Mittel eine Zahl im Bereich von 1 bis 100 ist,
$R^3$ eine monovalente organische Gruppe ist, ausgewählt aus der Gruppe die aus Alkylgruppen mit 1 bis 30 Kohlenstoffatomen, Alkenyl gruppen mit 2 bis 30 Kohlenstoffatomen, Arylgruppen mit 6

bis 30 Kohlenstoffatomen, Aralkylgruppen mit 7 bis 30 Kohlenstoffatomen, Cycloalkylgruppen mit 3 bis 30 Kohlenstoffatomen, Cycloalkenylgruppen mit 3 bis 30 Kohlenstoffatomen und heterocyclischen Verbindungen mit 2 bis 30 Kohlenstoffatomen besteht, und

X ein Wasserstoffatom, ein Alkalimetallatom, ein Erdalkalimetallatom, eine Ammoniumgruppe oder eine Alkylamingruppe ist und

(II) mindestens ein ungesättigtes Carbonsäuremonomer, dargestellt durch die allgemeine Formel II:

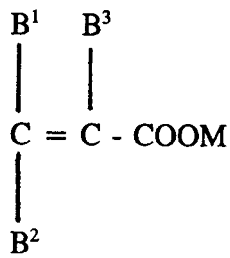

(II)

worin $B^1$ und $B^2$ unabhängig ein Wasserstoffatom, eine Methylgruppe oder -COOY sind, vorausgesetzt, daß $B^1$ und $B^2$ nicht gleichzeitig -COOY sind,

$B^3$ ein Wasserstoffatom, eine Methylgruppe, -COOY oder $-CH_2COOY$ ist, vorausgesetzt, daß $B^1$ und $B^2$ unabhängig ein Wasserstoffatom oder eine Methylgruppe sind, wenn $B^3$ -COOY oder $-CH_2COOY$ ist, und M und Y unabhängig ein Wasserstoffatom, ein Alkalimetallatom, ein Erdalkalimetallatom, eine Ammoniumgruppe oder eine Alkylamingruppe sind,

in einem Gewichtsverhältnis des polyalkylenglykolgruppenhaltigen Monomer (I) zum ungesättigten Carbonsäuremonomer (II), d.h. polyalkylenglykolgruppenhaltiges Monomer (I)/ ungesättigtes Carbonsäuremonomer (II), im Bereich von 0,5/99,5 bis 15/85, in einer Gesamtmenge des polyalkylenglykolgruppenhaltigen Monomer (I) und des ungesättigten Carbonsäuremonomer (II) angegeben sind, die nicht weniger als 60 Gewichtsprozent von allen im wasserlöslichen Copolymeren verwendeten Monomeren ausmachen und

(b) eine elektrolytische Verbindung, von welcher der anionische Teil ein chemisches Formelgewicht von nicht mehr als 500 aufweist und der anionische Teil ein chemisches Formelgewicht von nicht mehr als 100 pro elektrischer Ladung aufweist.

2. Zusammensetzung gemäß Anspruch 1, in welcher das mittlere Molekulargewicht des wasserlöslichen Copolymeren (a) im Bereich von 5.000 bis 300.000 liegt.

3. Zusammensetzung gemäß Anspruch 1 oder 2, in welcher das ungesättigte Carbonsäuremonomer (II) zumindest ein Bestandteil ist, ausgewählt aus der Gruppe die aus Maleinsäure, (Meth)acrylsäure und einem Alkali-, einem Erdalkalimetall-, einem Ammonium- und einem Alkylaminsalz davon besteht.

4. Zusammensetzung gemäß Anspruch 1 oder 2, in welcher das ungesättigte Carbonsäuremonomer (II) zumindest ein Bestandteil ist, ausgewählt aus der Gruppe die aus Maleinsäure, (Meth)acrylsäure und deren Natrium-, Kalium-, Ammonium- und Alkanolaminsalz besteht.

5. Zusammensetzung gemäß einem der Ansprüche 1 bis 4, in welcher das alkylenglykolgruppenhaltige Monomer (I) zumindest ein Bestandteil ist, ausgewählt aus der Gruppe die aus Monocrotonat, Monomaleat und Mono(meth)acrylat besteht, worin $R^2$ eine Ethylen- oder Propylengruppe ist, n im Mittel eine Zahl im Bereich von 5 bis 80 ist und $R^3$ zumindest ein Bestandteil ist, ausgewählt aus der Gruppe, die aus einer Alkylgruppe mit 1 bis 20 Kohlenstoffatomen, Phenylgruppe, Naphthylgruppe, Alkylphenylgruppe, die 1 bis 3 Alkylgruppen mit 1 bis 10 Kohlenstoffatomen als Substituent aufweist, Benzyl- und Pyridinylgruppe besteht.

6. Zusammensetzung gemäß einem der Ansprüche 1 bis 5, in welcher das Gewichtsverhältnis des polyalkylenglykolgruppenhaltigen Monomeren (I) zum ungesättigten Carbonsäuremonomer (II), d.h., polyalkylenglykolgruppenhaltiges Monomer (I)/ ungesättigtes Carbonsäuremonomer (II) 1/99 bis 10/90 beträgt.

7. Zusammensetzung gemäß Anspruch 1, in welcher der Bestandteil (b) zumindest ein Bestandteil ist, ausgewählt aus der Gruppe die aus Carbonsäuren, Hydroxycarbonsäuren, Iminocarbonsäuren, Pyrophosphorsäure, Tripolyphosphorsäure und deren Alkalimetall-, Erdalkalimetall-, Ammonium- und Aminsalzen besteht.

**8.** Zusammensetzung gemäß Anspruch 1, in welcher das Gewichtsverhältnis des wasserlöslichen Copolymeren (a) zur elektrolytischen Verbindung (b), d.h. wasserlösliches Copolymer (a) / elektrolytische Verbindung (b) 99/1 bis 1/99 beträgt.

**9.** Kohle-Wasser-Aufschlämmungszusammensetzung hergestellt durch Vereinigen einer Kohle-Wasser-Aufschlämmung mit einer Additivzusammensetzung gemäß Anspruch 1.

**10.** Zusammensetzung gemäß Anspruch 9, in welcher der Bestandteil (a) einen Bereich von 0,02 bis 2 Gewichtsprozent ausmacht und der Bestandteil (b) einen Bereich von 0,02 bis 2 Gewichtsprozent ausmacht, jeweils bezogen auf das Gewicht des Kohlepulvers (auf trockener Basis).

**11.** Zusammensetzung gemäß Anspruch 10, in welcher die Kohlekonzentration in dieser Kohle-Wasser-Aufschlämmungszusammensetzung im Bereich von 40 bis 90 Gewichtsprozent liegt.

## Revendications

**1.** Une composition additive utile dans une dispersion très concentrée charbons-eau, ayant comme composants essentiels

(a) un copolymère soluble dans l'eau obtenu par utilisation comme composants essentiels (I) d'au moins un des monomères contenant un groupe polyalkylèneglycol représentés par la formule générale I :

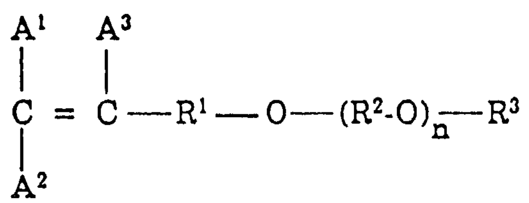

(I)

dans laquelle

$A^1$ et $A^2$ sont indépendamment un atome d'hydrogène, un groupe méthyle, ou -COOX, sous réserve que $A^1$ et $A^2$ ne soient pas simultanément -COOX,

$A^3$ est un atome d'hydrogène, un groupe méthyle, -COOX ou $-CH_2COOX$, sous réserve que $A^1$ et $A^2$ soient indépendamment un atome d'hydrogène ou un groupe méthyle lorsque $A^3$ est -COOX ou $-CH_2COOX$,

$R^1$ est -CO- ou $-CH_2CO-$,

$R^2$ est un groupe alkylène de 2 à 4 atomes de carbone, n est un nombre dans la gamme moyenne de 1 à 100,

$R^3$ est un groupe organique monovalent choisi dans l'ensemble constitué par les groupes alkyles de 1 à 30 atomes de carbone, les groupes alcényles de 2 à 30 atomes de carbone, les groupes aryles de 6 à 30 atomes de carbone, les groupes aralkyles de 7 à 30 atomes de carbone, les groupes cycloalkyles de 3 à 30 atomes de carbone, les groupes cycloalcényles de 3 à 30 atomes de carbone et les composés hétérocycliques de 2 à 30 atomes de carbone, et

X est un atome d'hydrogène, un atome de métal alcalin, un atome de métal alcalino-terreux, le groupe ammonium ou un groupe alkylamine et

(II) d'au moins un des monomères de type acide carboxylique insaturé représentés par la formule générale II :

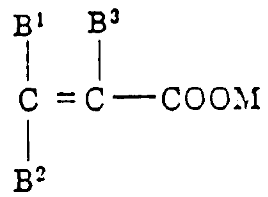

(II)

dans laquelle

$B^1$ et $B^2$ sont indépendamment un atome d'hydrogène, un groupe méthyle ou -COOY, sous réserve que $B^1$ et $B^2$ ne soient pas simultanément -COOY,

$B^3$ est un atome d'hydrogène, un groupe méthyle, -COOY ou $-CH_2COOY$, sous réserve que $B^1$ et $B^2$ soient indépendamment un atome d'hydrogène ou un groupe méthyle lorsque $B^3$ est -COOY ou $-CH_2COOY$, et

M et Y sont indépendamment un atome d'hydrogène, un atome de métal alcalin, un atome de metal alcalino-terreux, le groupe ammonium ou un groupe alkylamine, dans un rapport pondéral dudit monomère contenant un groupe polyalkylèneglycol (I) audit monomère de type acide carboxylique insaturé (II), c'est-à-dire groupe monomère contenant un groupe polyalkylèneglycol (I)/monomère de type acide carboxylique insaturé (II), dans la gamme de 0,5/99,5 à 15/85, en une quantité totale dudit monomère contenant un groupe polyalkylèneglycol (I) et dudit monomère de type acide carboxylique insaturé (II) constituant une proportion au moins égale à 60 % du poids total de tous les monomères utilisés dans le copolymère soluble dans l'eau et

(b) un composé électrolytique dont le fragment anion a un poids de formule chimique ne dépassant pas 500 et le fragment anion a un poids de formule chimique ne dépassant pas 100 par charge électrique.

2. Une composition selon la revendication 1, dans laquelle le poids moléculaire moyen dudit copolymère soluble dans l'eau (a) est dans la gamme de 5 000 à 300 000.

3. Une composition selon la revendication 1 ou 2, dans laquelle ledit monomère de type acide carboxylique insaturé (II) est au moins un composant de l'ensemble constitué par l'acide maléique, l'acide (méth)acrylique et un sel de métal alcalin, un sel de métal alcalino-terreux, un sel d'ammonium et un sel d'alkylamine de ceux-ci.

4. Une composition selon la revendication 1 ou 2, dans laquelle ledit monomère de type acide carboxylique insaturé (II) est au moins un composant de l'ensemble constitué par l'acide maléique, l'acide (méth)acrylique et un sel de sodium, un sel de potassium, un sel d'ammonium et un sel d'alcanolamine de ceux-ci.

5. Une composition selon l'une quelconque des revendications 1 à 4, dans laquelle ledit monomère contenant un groupe alkylèneglycol (I) est au moins un composant choisi dans l'ensemble constitué par un monocrotonate, un monomaléate et un mono(méth)acrylate, où $R^2$ est un groupe éthylène ou un groupe propylène, n est un nombre dans la gamme moyenne de 50 à 80, et $R^3$ est au moins un composant choisi dans l'ensemble constitué par un groupe alkyle de 1 à 20 atomes de carbone, le groupe phényle, le groupe naphtyle, un groupe alkylphényle ayant 1 à 3 groupes alkyles de 1 à 10 atomes de carbone comme substituants, le groupe benzyle et le groupe pyridinyle.

6. Une composition selon l'une quelconque des revendications 1 à 5, dans laquelle le rapport pondéral dudit monomère contenant un groupe polyalkylèneglycol (I) audit monomère de type acide carboxylique insaturé (II), c'est-à-dire monomère contenant un groupe alkylèneglycol (I)/monomère de type acide carboxylique insaturé (II), est de 1/99 à 10/90.

7. Une composition selon la revendication 1, dans laquelle ledit composant (b) est au moins un composant choisi dans l'ensemble constitué par les acides carboxyliques, les acides hydroxycarboxyliques, les acides iminocarboxyliques, l'acide pyrophosphorique, l'acide tripolyphosphorique et les sels de métal alcalin, les sels de métal alcalino-terreux, les sels d'ammonium et les sels d'amine de ceux-ci.

8. Une composition selon la revendication 1, dans laquelle le rapport pondéral dudit copolymère soluble dans

l'eau (a) audit composé électrolytique (b), c'est-à-dire copolymère soluble dans l'eau (a)/composé électrolytique (b), est de 99/1 à 1/99.

**9.** Une composition de dispersion charbons-eau produite par combinaison d'une dispersion charbons-eau avec une composition additive selon la revendication 1.

**10.** Une composition selon la revendication 9, dans laquelle ledit composant (a) constitue une proportion dans la gamme de 0,02 à 2 % en poids et ledit composant (b) constitue une proportion dans la gamme de 0,02 à 2 % en poids, respectivement sur la base du poids de la poudre de charbons (matières sèches).

**11.** Une composition selon la revendication 10, dans laquelle la concentration des charbons dans ladite composition de dispersion charbons-eau est dans la gamme de 40 à 90 % en poids.